Europäisches Patentamt

(19) European Patent Office

Office européen des brevets

(11) Publication number: **0 437 227 A2**

## (12) EUROPEAN PATENT APPLICATION

(21) Application number: **91100153.5**

(22) Date of filing: **04.01.91**

(30) Priority: **08.01.90 US 461659**

(43) Date of publication of application:
**17.07.91 Bulletin 91/29**

(84) Designated Contracting States:
**AT BE CH DE DK ES FR GB GR IT LI LU NL SE**

(51) Int. Cl.⁵: **F16F 1/04, F16J 15/00**

(71) Applicant: Balsells, Peter J.
**17592 Sherbrook Drive**
**Tustin, California 92680 (US)**
Applicant: Balsells, Joan C.
**17592 Sherbrook Drive**
**Tustin, California 92680 (US)**

(72) Inventor: Balsells, Peter J.
**17592 Sherbrool Drive**
**Tustin, California 92680 (US)**

(74) Representative: KOHLER SCHMID +
**PARTNER Patentanwälte**
**Ruppmannstrasse 27**
**W-7000 Stuttgart 80 (DE)**

(54) **Canted coil spring assembly and method.**

(57) A canted-coiled spring assembly is provided which includes a plurality of coils canted along a centerline thereof with primary loading means for compressing the plurality of coils generally along a major, or minor, axis thereof. The plurality of coils have a specific primary loading-deflection characteristic along the primary loading direction and the secondary loading means are provided for defining the specific primary load-deflection characteristics.

_FIG. 8.

Jouve, 18, rue Saint-Denis, 75001 PARIS

# CANTED COIL SPRING ASSEMBLY AND METHOD

The present invention generally relates to canted-coiled springs and seals and, more particularly, relates to radially resilient canted-coiled springs assembled with a selected turn angle for enabling specific load-deflection characteristics.

The load-deflection characteristics of garter-type axial springs have been studied extensively, see U.S. Patent No. 4,830,344. Many parameters, including the wire size, the coil heights the coil spacing, and the front angle, which defines a leading portion of each canted spring coil, may be varied to tailor the load-deflection characteristics of the spring.

Springs may also have coils which are interconnected in a manner forming a garter-type axially resilient coil spring with the trailing portion along an outside diameter of the garter-type axially resilient coil spring, and the leading portion along an inside diameter of the garter-type axially resilient coil spring, or with the trailing portion along an inside diameter of the garter-type axially resilient coil spring and the leading portion along an outside diameter of the garter-type axially resilient coil spring. These references teach the tailoring of the load-deflection characteristics of a garter-type axially resilient coil spring beyond the range normally achieved with conventional garter-type axially resilient coil springs.

This feature enables a spring to be formulated with generally higher load-deflection characteristics. That is, the spring is able to exert a greater force in response to a given deflection than a conventional spring having the same dimensions and wire size.

As a result, these springs can be fabricated from smaller wire and have a closer coil spacing, while still exerting the same force in response to deflection as prior art springs.

It should be recognized that this characteristic is quite important, particularly when the springs are used in conjunction with a seal. Because seals are generally made from a soft material to enhance their sealing characteristics, they must be evenly loaded. That is, the stress concentration on the seal should be uniform in order that relatively high and low pressure points do not occur across the face of the seal, which leads to inefficient sealing. When non uniform loading occurs, the resultant high pressure points are subject to greater force and consequently greater wear, while at the same time, the necessary sealing force may not be provided in the low pressure points, the latter leading to providing unnecessarily high force concentration to the spring in order to effect proper sealing.

The present invention concerns a resilient canted coiled spring having a turn angle, as hereinafter defined and discussed, which can be varied in order to achieve higher load-deflection characteristics than heretofore possible utilizing the same wire diameters. The advantages of higher loading have been hereinabove discussed. In addition, the specific relationship and working resilient range of springs made in accordance with the present invention, can also be used to advantage and provide springs with tailored load-deflection characteristics which were not heretofore possible.

## SUMMARY OF THE INVENTION

In accordance with the present invention, a canted coiled spring assembly includes a plurality of coils canted along a centerline thereof, primary loading means for compressing said plurality of coils generally along a major, or minor, axis thereof, said plurality of coils having a specific primary load-deflection characteristics in a primary loading direction, and secondary loading means for defining the specific primary load-deflection characteristics.

It should be appreciated that the determination of the force-deflection characteristics apply only to springs which are allowed to flex in an uninhibited manner as distinguished from "springs" which are filled with an elastomer, or the like, as set forth in U.S. Patent No. 3,183,010 to Bram, the latter truly being characterized as reinforcement elements rather than springs.

The secondary loading means, in accordance with the present invention, may include means for loading the plurality of coils along a minor axis thereof when the primary loading means comprises the plurality of coils along a major axis and alternatively may include means for loading the plurality of coils along a major axis thereof when the primary loading means compresses the plurality of coils a long a major axis thereof. Further, the secondary loading means may include means for causing the plurality of coils to assume a turn angle. A plurality of coils may be interconnected in a manner forming a continuous spring with a primary load-deflection characteristic being exhibited along an axial direction of the circular spring.

Alternatively, the plurality of coils may be interconnected in a manner forming a circular spring having a primary load-deflection characteristic along a radial direction of the circular spring.

More particularly, the secondary loading means may comprise surface means for engaging the circular spring with the surface means being at an angle with the spring axial direction. In addition, the secondary loading means may further include wedge means for cooperating with the surface means to deflect the plurality of coils along the minor axis thereof. The surface means may include two surfaces disposed at an angle with one another and the wedge means may be disposed between the plurality of coils and one of the two surfaces. Alternatively, the wedge means may be fixed to the secondary loading means.

## BRIEF DESCRIPTION OF THE DRAWINGS

The advantages and features of the present invention will appear from the following description, when considered in conjunction with the accompanying drawings in which :

Figure 1 is a canted coil spring in accordance with the present invention, with the coils being canted in a clockwise direction ;

Figure 2 is a view taken along line 2-2 of the spring in Figure 1 showing a back angle on an inside diameter of the spring and a front angle on an outside diameter of the spring ;

Figure 3 is a spring in accordance with the present invention in which the coils ate canted in a counterclockwise manner ;

Figure 4 is a view of the spring of figure 3 taken along the line 4-4 showing a back angle on an outside diameter of the spring and a front angle on an inside diameter of the spring ;

Figure 5 is a plane view of a radial spring in accordance with the present invention, which is canted in a clockwise direction about the centerline thereof, with the back angle on the top thereof ;

Figure 6 is a canted coil radial spring in accordance with the present invention in which the coils are canted in a counter-clockwise direction and the back angle is disposed on the bottom thereof ;

Figure 7 shows a typical load-deflection curve for a spring for the purpose of defining the nomenclature thereof ;

Figure 8 shows a canted coil spring assembly in accordance with the present invention which a radial spring is shown with a turn angle of 90 degrees ;

Figure 9 is a canted coil spring assembly in accordance with the present invention showing an axial cone spring with an assembly turn angle of less than 90 degrees ;

Figure 10 is a spring assembly showing a spring in an axial inverted cone position with a turn angle of less than 90 degrees ;

Figure 11 shows an axial spring in accordance with the present invention in which primary loading is along a minor axis of the spring and secondary loading is along major axis of the spring ;

Figure 12 shows an axial cone spring with an assembly turn angle of less than 30 degrees ;

Figure 13 shows an axial inverted cone spring within an assembly turn angle of less than 30 degrees ;

Figure 14, 15 and 16 show canted coil spring assembly in accordance with the present invention in which the spring is disposed within a groove having non-parallel side walls ;

Figures 17-24 show a canted coil spring assembly in which the spring is disposed within a groove having a surface at an angle through horizontal plane ;

Figure 25 shows the use of a step, or wedge, to retain the spring in groove ;

Figure 26 shows a spring disposed in a groove having a wedge therein for retaining and providing secondary loading of the spring ;

Figures 27-32 are load-deflection curves for various springs as hereindescribed.

## DETAILED DESCRIPTION

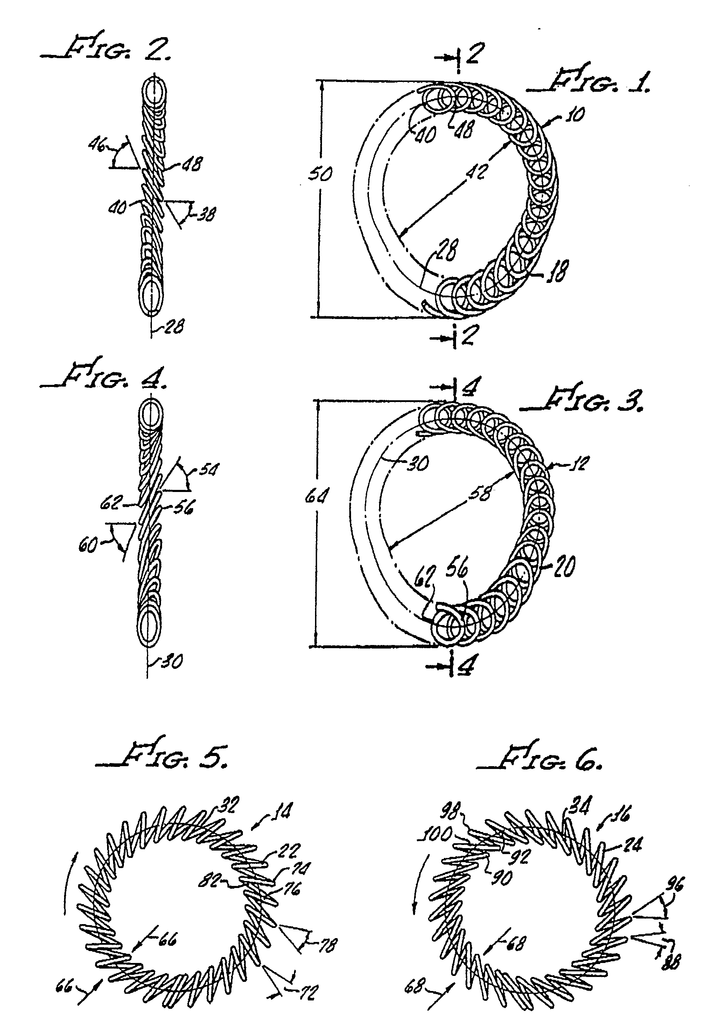

Turning now to Figures 1 through 6, there is shown a number of canted coil spring assemblies 10, 12, 14, 16, in accordance with the present invention, each including a plurality of coils 18, 20, 22, 24, respectively canted along center lines 28, 30, 32, 34.

Springs 10 and 12 have the coils 18, 20 interconnected in a manner forming a circular spring having primary load-deflection characteristics along an axial direction of the circular springs 10, 12. Spring 10 shown in Figure 1, which has a clockwise canting of coils, has the coils 18 interconnected so that a back angle 38, which defines a trailing portion 40, is along an inside diameter 42 of the spring 10 and a front angle 46, which defines a leading portion of the coil 48 is along an outside diameter 50 of the spring 10, see Figure 2.

Turning to figures 3 and 4, the axial spring 12 therein has the coils 20 interconnected in a fashion having a counter-clockwise canting of coils with a back angle 54, defining a trailing portion 56, along inside diameter 58 of the spring 12 and a front angle 60, defining a leading portion 62, along an outside diameter 64 of the spring 12.

Turning now to Figures 5 and 6, there is shown springs 14, 16 having a plurality of coils 20, 24 which are

EP 0 437 227 A2

interconnected in a manner forming a circular spring having a primary load-deflection characteristic along a radial direction indicated by the arrows 66, 68. As shown in Figure 5, the coils are interconnected in a manner for providing a clockwise canting with back angle 72 defining a trailing portion 74 along a top 76 and a front angle 78 defining a leading portion 82 which is disposed along a bottom of the spring 14.

Alternatively, as shown in Figure 6, the spring 16 may have coils 24 interconnected in a manner causing canting of the coils in a counter-clockwise direction with a back angle 88 defining a trailing portion 90 along a bottom 92 of the spring 16 and a front angle 96 defining a leading portion 98 disposed along a top 100 of the spring 16.

As hereinafter described, all of the springs 10, 12, 14, 16, may have a generally constant force deflection characteristic within a working deflection thereof.

Figure 7 shows a representative load-deflection curve A for springs 10, 12, 14, 16 in which the spring exhibits a generally linear load-deflection relationship as shown by the line segment 104 until it reaches a minimum load point 106, after which the load-deflection curve remains relatively constant within a working deflection 110 between the minimum load point 106 and a maximum load point 112. Between the minimum load point 106 and the maximum load point 112, the load-deflection curve may be constant, or show a slight increase, as shown in Figure 7.

The area between the minimum load point 106 and the maximum load point 112 is commonly referred to as the working range 110 of the spring. The spring 10, 12, 14, 16 is normally loaded for operation within this range as indicated by the point 114.

Loading of the spring 10, 12, 14, 16 beyond the maximum load point 112, results in abrupt deflection response until it reaches a butt point 116 which results in a permanent set in the spring, as a result of overloading. Also indicated in Figure 7 is the total deflection range 118 which is defined as the deflection between the unloaded spring 10, 12, 14, 16 and the deflection at the maximum load point 112.

Turning now to Figure 8, there is shown canted coil spring assembly 124 which includes a spring 126 which includes a plurality of wire coils 128 canted along a centerline thereof and disposed in a groove 130 in a lower fixture 132. An upper flange, or fitting 134, provides primary loading means for compressing the plurality of coils 128 generally along a major axis thereof as hereinafter described in greater detail. The plurality of coils 128 have a specific primary load-deflection characteristic in a primary loading direction which in this case is parallel to the major axis of the coils 128. The groove 130 with proper selection of its groove width and placement relative to the diameter of the spring 126 provides secondary loading means for defining the specific primary load-deflection characteristics.

As shown in Figure 8, the radial spring 126 includes an assembly turn angle $\alpha$ (before loading with the upper fixtures 134) of approximately 90 degrees. This spring is assembled in the groove which has a larger minimum diameter than the inside diameter of the radial spring 126 in order that it is deflected along the minor axis thereof. The groove width 140 is smaller or equal to the coil height measured along the minor axis in order to provide interference with the coils 128 to thereby retain the spring 126 within the groove 130.

Turning now to figure 9, there is shown canted coil spring assembly 146 generally including a plurality of coils 148 forming a spring 150 disposed in a groove 152 in a lower fixture 154. As similar to flange 134 shown in Figure 8, an upper fitting or flange 156 provides primary loading means for compressing the plurality of coils 148 generally along a major axis thereof and the groove 152 provides secondary loading means for defining this specific primary load-deflection characteristics, generally along the major axis of the spring 150.

More specifically, the spring 150 may be defined as an axial cone spring within an assembly turn angle of $\alpha$ less than 90 degrees. The spring is deflected in a direction along a minor axis thereof by the position of the groove 152 with relation to the inside diameter of the spring. The assembly turn angle of less than 90 degrees is provided by the groove width 160 which is larger than the coil height measured along the minor axis, but smaller than the coil width measured along the coil major axis. As discussed in connection with the spring assembly 124, the spring 150 is retained within the groove 152 by interference of the coils 148 with the groove 160.

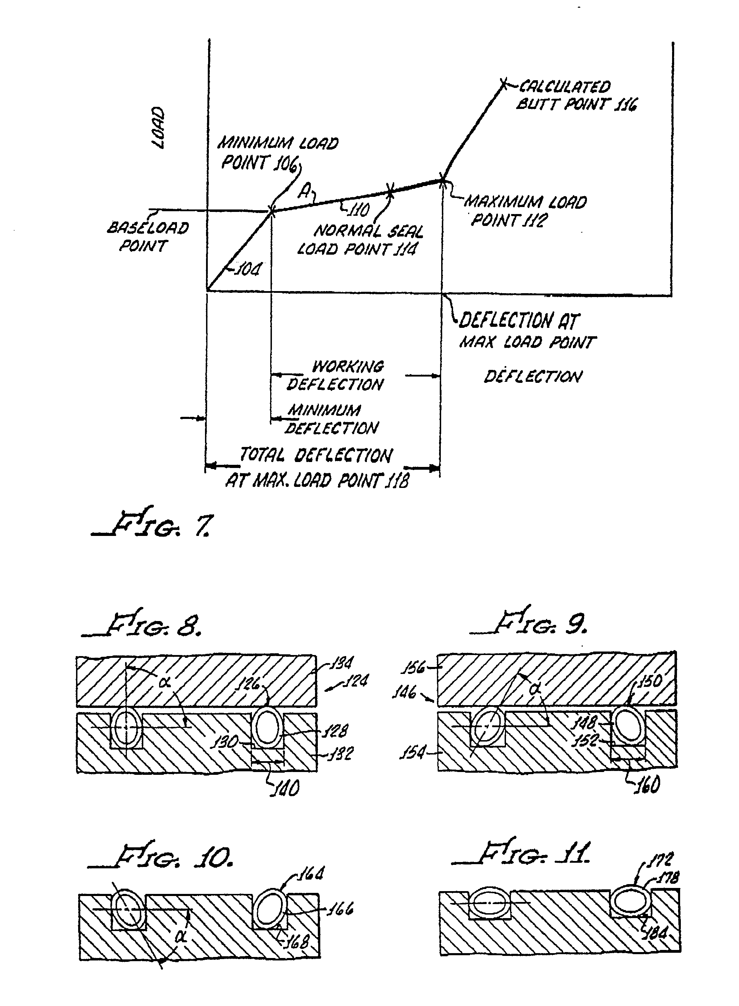

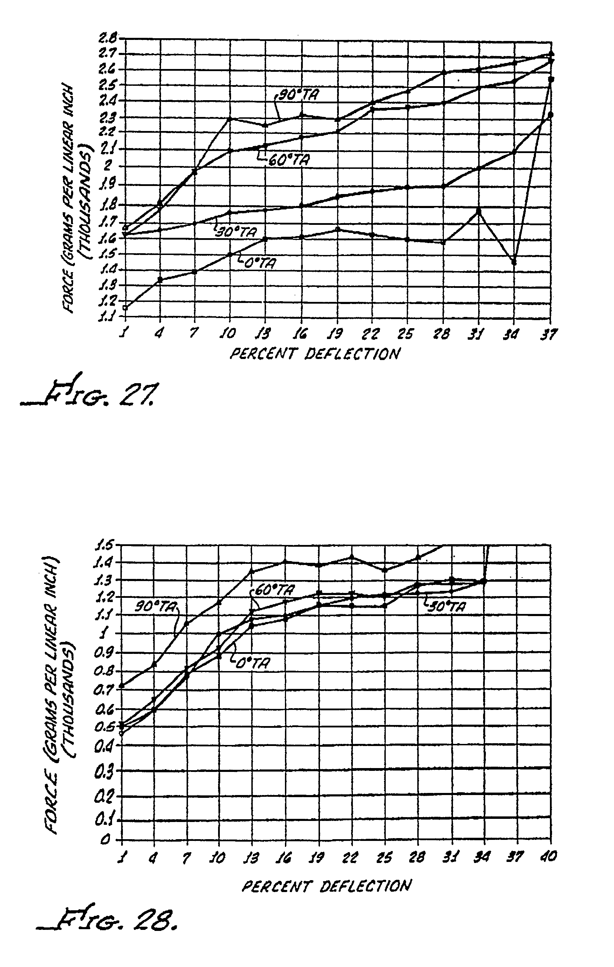

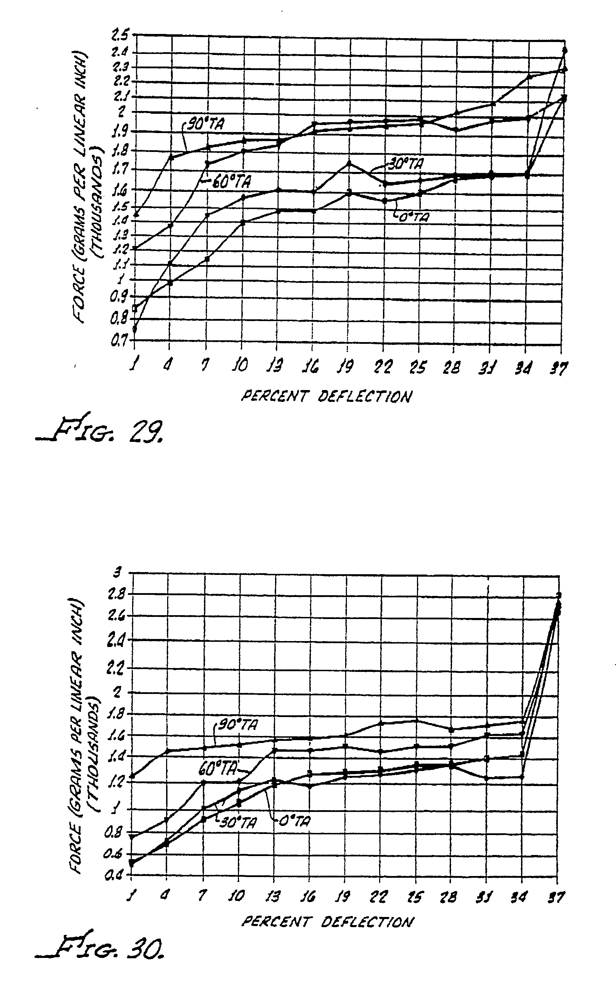

For the sake of brevity in discussing the remaining embodiments of the present invention, the upper flange or fitting 134, 156 as shown in Figure 10, is not shown in Figures 12-28. It should be appreciated that each of the shown embodiments include an upper fitting or flange 124, 156 for providing the primary loading means.

Turning to Figure 10, there is shown an axial inverted cone spring 164 having a plurality of coils 166 with an assembly turn angle $\alpha$ of less than 90 degrees. The spring is deflected in an axial direction along the minor axis by the groove which is larger than the coil height but smaller than the coil widths so as to provide an interference with the coils 166 and retain the spring in the groove 168.

The springs 126, 150 and 164, shown in the embodiments of Figure 8, 9, and 10, show the retention of the spring by deflection of the spring 126, 150, 166 along the minor axis within the groove, with the primary loading being applied along the major axis of the spring.

4

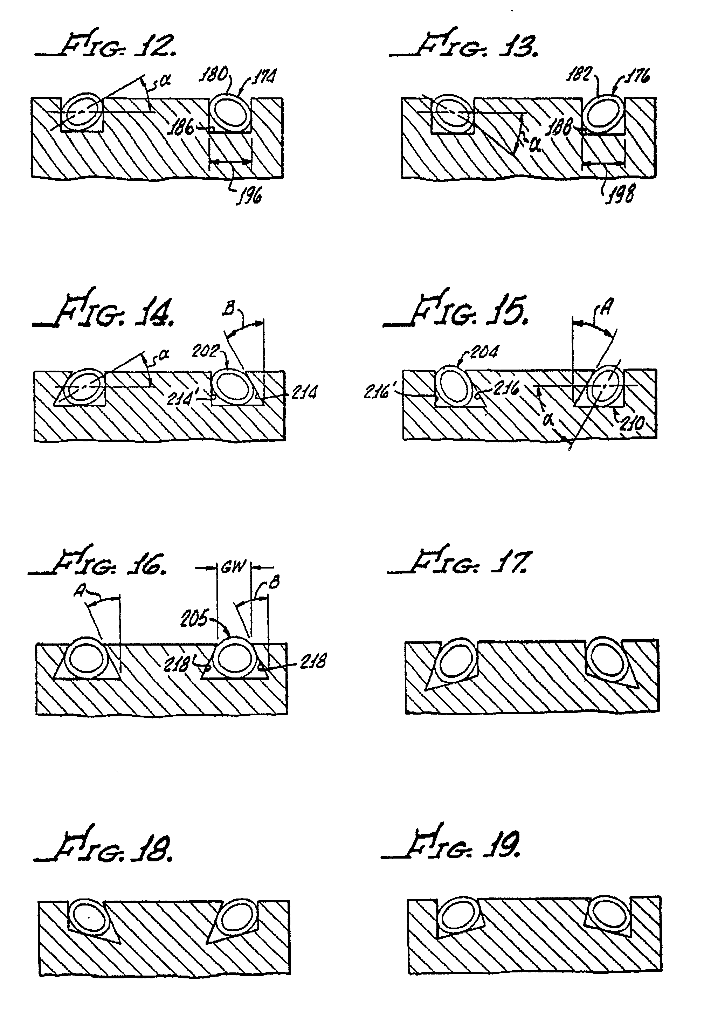

Alternatively, as shown in Figures 11-13, springs 172, 174, 176, having a plurality of coils 178, 180, 182, respectively, are disposed in grooves 184, 186, 188, respectively. Springs 178, 181, 182 are disposed within the grooves 184, 186, 188 in a manner in which the primary loading is along the minor axis thereof, for the secondary loading provided by the grooves 184, 186, 188, along the major axis thereof.

In Figure 11, the axial spring 178 is shown therein with an assembly turn angle of 0 degrees and the groove 184 has a groove with 194 smaller than the coil width measured along the major axis so as to provide an interference with the coils 178, thereby retaining the spring 172 within the cavity 184.

As shown in Figure 12, the spring 180 is in the shape of a cone with an assembly turn angle α of less than 30 degrees. Spring 180 is deflected in a radial direction centered along the minor axis with a groove width 196 smaller than the coil width measured along the major axis in order to provide interference with the coils 180 to retain the spring 184 within the groove 186.

Shown in Figure 13, the spring 176 has an inverted cone shape with an assembly turn angle of less than 30 degrees. Again, the spring 176 is deflected along the major axis thereof by a groove 188 and the groove width 198 is smaller than the coil width in order to provide interference with the coils 182 for retaining the spring 176 within the cavity 188.

All of the springs 126, 150, 164, 172, 174 and 176 shown in Figures 8-13, respectively, are shown loaded within grooves 130, 152, 168, 184, 186, 188 having parallel walls which are perpendicular to the bottom of the groove surface. Alternatively, as shown in Figures 14-16, springs 202, 204, 206 may be assembled into the grooves 208, 210, 212, respectively, having side walls 214, 214', 216, 216', 218, 218' which are not parallel to each other within.

As shown in Figure 14, the outer wall 216 is disposed at an angle B from 0 to 60 degrees with respect to an inner wall 216'. In this instance the cone spring 202 may have an assembly turn angle α from 0 to 90 degrees. However, it is preferably between 45 degrees and 80 degrees. This dovetail outward groove construction shown in Figure 14 enables greater tolerance variation and greater spring deflection.

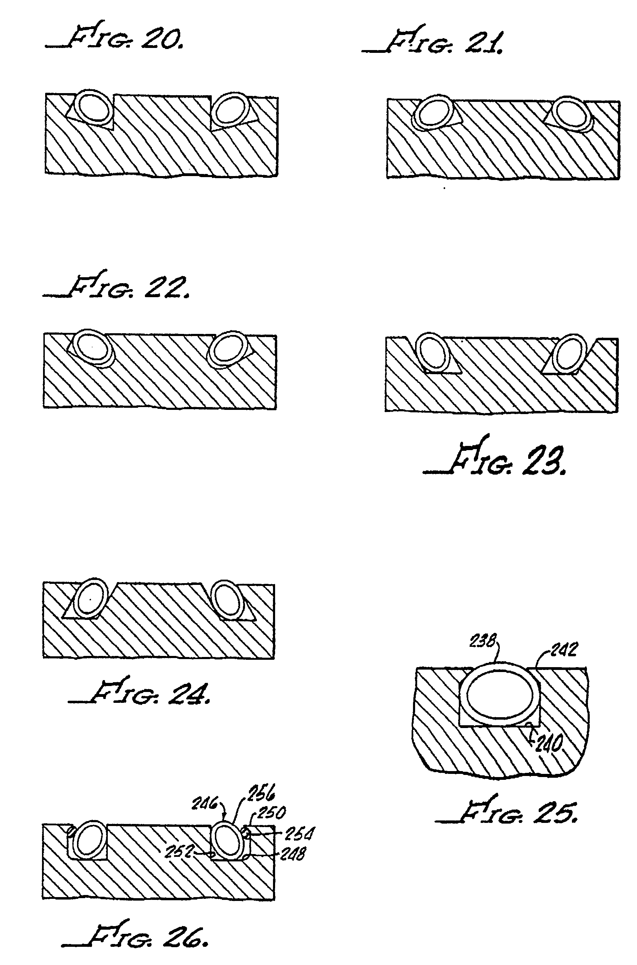

Shown in Figure 15, the inner wall 216 of the groove 116 may have an angle A between 0 and 60 degrees with respect to the opposing wall 216' and the inverted cone spring 204 may have an assembly turn angle of between about 0 and 90 degrees, but it is preferably between about 45 and 80 degrees. This dovetail inward groove 208 construction enables added space for spring deflection.

In Figure 16, the groove 212 includes outer wall 218 and inner wall 218, each having an angle A, B with a normal to an interfacial surface 230 of between 0 and 60 degrees.

Shown in Figures 17-24 are other variations of groove configurations for enabling the tension of springs therein with the secondary loading of the spring being provided by the associated groove. These figures are provided without character references for the sake of clarity and diagrammatically show the variations of groove possibilities which are included in the present invention.

Figure 25 shows a spring 238 retained in a groove 240 by means of a step 242 for providing further means for retaining the spring 238 within the groove 240. It is to be appreciated that step 242 may be used in combination with any of the hereinbefore described grooves in order to further hold the spring and define its assembly turn angle.

Shown in Figure 26 is a spring 246 within a groove 248 and further including a wedge 250 which provides means for cooperating with a wall 254, or surface, in order to deflect the plurality of coils 256 along the minor axis thereof.

As hereinafter shown, when loading the spring 126 radially, the load is greater when the turn angle is 90 degrees than when the turn angle is 0 degrees and such load increases progressively from 0 degrees to 90 degrees. In addition, an axial spring 10 with the back angle 38, or trailing portion 40 along the inside as I.D. of the spring will develop substantially higher force than a spring 12 having a back angle 54 or trailing portion 56 along the outside as O.D. of the spring with both springs having the same turn angle.

As hereinabove pointed out, this discovery enables greater tayloring ability. That is, a greater range of wire size and coil spacing can be used while still exerting the same or greater force in response to deflection. This has significant advantage when the spring is used in conjunction with a seal as hereinbefore described.

Table 1 sets forth the parameters of springs made in accordance with the present invention including the turn angle, number of coils, inside diameter (I.D.), the measured angle, coil spacing, wire diameter (W.D.), coil height (h) and coil diameter (d) to wire diameter. Most of these parameters are illustrated in Figures 6 and 6B. The springs are grouped in three categories ; and RF 106MB, which has coil spacing of 0.018 inch, RF 106, MB(CC) having coil spacing of 0.0138 inch and RF X11661 having coil spacing of 0.033 inch. It should be pointed out that the greater the spacing between the coils, the greater difference between springs with a 0 degree turn angle and the spring with a 90 degree turn angle. This is generally shown in Figures 27-32 hereinafter described in greater detail.

Turning now to Figure 27, there is shown the force or deflection curves for springs RF 106MB having turn angles (TA) of 0, 30, 60 and 90 degrees. It can be observed that in the working deflection range (see Figure 7 for a definition) the force increases as the turn angle increases and the difference in load between the 0 degree turn angle and the 90 degree turn angle is about 39 percent.

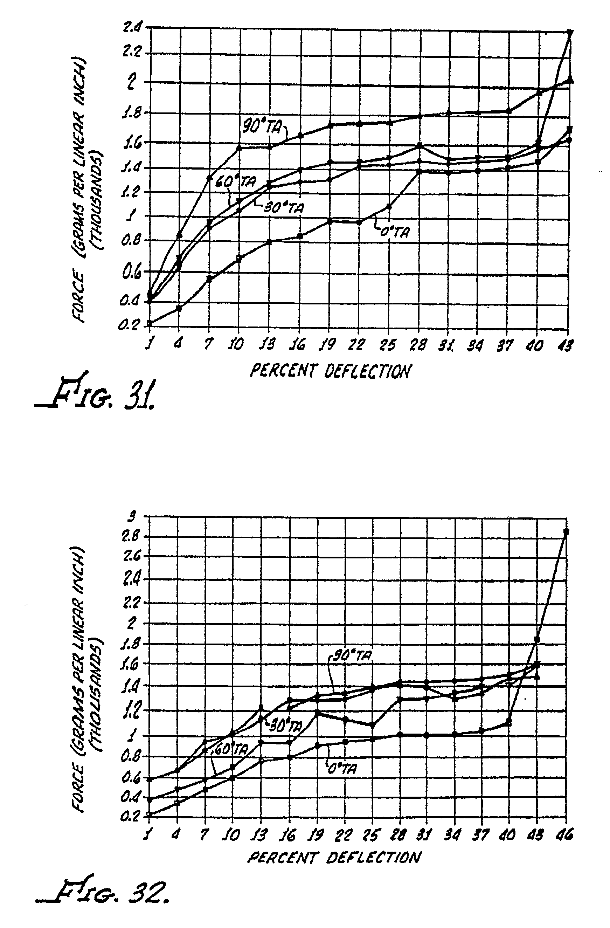

As a comparison, shown in figure 28, as the load force-deflection characteristics of spring RF 106MB for turn angles of 0, 30, 60 and 90 in which the measured front angle is 30 degrees while the back angle is nominally 14 degrees. Comparing Figure 27 and Figure 28 shows marked differences. First, the effect of the turn angle is far less than the turn angle effect of the spring shown in Figure 27 for measured back angle springs. As shown in Figure 28, when the turn angle is increased from 0 to approximately 60 degrees, there is little change in the force-deflection curve in the working deflection range. Increased turn angle from 60 degrees to 90 degrees shows an increase with the variation between the 0 degree turn angle and 90 degree turn angle of approximately 19.7 percent.

Similarly, Figures 29 and 30 each show four curves corresponding to spring RF 106MB(CC) having a spring spacing of 0.018 inches back angle of about 17 degrees and a front angle of about 31.5 degrees. Figure 29 is a plot of those springs in which the back angle was measured at 17 degrees and Figure 30 represents springs in which the front angle was measured at 31.5 degrees. All of the curves show a general increase in the force-deflection curve in the working deflection range as the turn angle is increased from 0 to 90 degrees. in this instance, the variation between the 0 turn angle spring and the 90 degree angle spring was 31 percent, for the back angle measured spring and 33 percent for the front angle spring.

TABLE 1

| Spring No. | Turn Angle | No Coils | ID | Angle Measured By | Coil Space Inch | WD | Coil Height (h) | D/d |
|---|---|---|---|---|---|---|---|---|
| RF 106MB | 0 | 58 | 0.65 | Back Angle =14 | 0.018 | 0.022 | 0.162 | 7.36 |
| RF 106MB | 30 | 58 | 0.65 | Back Angle =14 | 0.018 | 0.022 | 0.161 | 7.32 |
| RF 106MB | 60 | 58 | 0.65 | Back Angle =14 | 0.018 | 0.022 | 0.161 | 7.32 |
| RF 106MB | 90 | 58 | 0.65 | Back Angle =14 | 0.018 | 0.022 | 0.162 | 7.36 |
| RF 106MB | 0 | 58 | 0.65 | Front Angle =30 | 0.018 | 0.022 | 0.162 | 7.36 |
| RF 106MB | 30 | 58 | 0.65 | Front Angle =30 | 0.018 | 0.022 | 0.162 | 7.36 |
| RF 106MB | 60 | 58 | 0.65 | Front Angle =30 | 0.018 | 0.022 | 0.162 | 7.36 |
| RF 106MB | 90 | 58 | 0.65 | Front Angle =30 | 0.018 | 0.022 | 0.162 | 7.36 |
| RF 106MB(CC) | 0 | 58 | 0.65 | Back Angle =17 | 0.0133 | 0.022 | 0.160 | 7.27 |
| RF 106MB(CC) | 30 | 58 | 0.65 | Back Angle =17 | 0.0133 | 0.022 | 0.160 | 7.27 |
| RF 106MB(CC) | 60 | 58 | 0.65 | Back Angle =17 | 0.0133 | 0.022 | 0.161 | 7.32 |
| RF 106MB(CC) | 90 | 58 | 0.65 | Back Angle =17 | 0.0133 | 0.022 | 0.160 | 7.27 |
| RF 106MB(CC) | 0 | 58 | 0.65 | Front Angle =31.5 | 0.0133 | 0.022 | 0.160 | 7.27 |
| RF 106MB(CC) | 30 | 58 | 0.65 | Front Angle =31.5 | 0.0133 | 0.022 | 0.160 | 7.27 |
| RF 106MB(CC) | 60 | 58 | 0.65 | Front Angle =31.5 | 0.0133 | 0.022 | 0.160 | 7.27 |
| RF 106MB(CC) | 90 | 58 | 0.65 | Front Angle =31.5 | 0.0133 | 0.022 | 0.160 | 7.27 |
| RF X11661 | 0 | 41 | 0.63 | Front Angle =38 | 0.033 | 0.022 | 0.162 | 7.36 |
| RF X11661 | 30 | 41 | 0.63 | Front Angle =38 | 0.033 | 0.022 | 0.162 | 7.36 |
| RF X11661 | 60 | 41 | 0.63 | Front Angle =38 | 0.033 | 0.022 | 0.162 | 7.36 |
| RF X11661 | 90 | 41 | 0.63 | Front Angle =38 | 0.033 | 0.022 | 0.162 | 7.36 |
| RF X11661 | 0 | 41 | 0.63 | Back Angle =16 | 0.033 | 0.022 | 0.162 | 7.36 |
| RF X11661 | 30 | 41 | 0.63 | Back Angle =16 | 0.033 | 0.022 | 0.162 | 7.36 |
| RF X11661 | 60 | 41 | 0.63 | Back Angle =16 | 0.033 | 0.022 | 0.162 | 7.36 |
| RF X11661 | 90 | 41 | 0.63 | Back Angle =16 | 0.033 | 0.022 | 0.162 | 7.36 |

Figures 31 and 32 show the results of force-deflection testing for spring RF X11661 using turn angles from 0 to 90 degrees, as set forth in Table 1, Figure 31 showing spring in which the back angle was measured and Figure 32 showing the spring in which the front angle was measured. In each instance, the nominal back angle is 16 degrees and nominal front angle as 38 degrees.

As shown in Figure 31, a spring with a turn angle of 90 degrees has a 77 percent force higher than the spring with a 0 degree turn angle. Figure 32 shows the difference between the 90 degree turn angle and the 0 degree turn angle of only 37 percent.

It should be appreciated that the wire may be fabricated counterclockwise or clockwise and, accordingly, the coils may counterclockwise or clockwise. In either case, the performance is the same as long as the back angle and front angles are the same.

Although there has been described hereinabove a canted coil spring assembly in accordance with the present invention, for purposes of illustrating the manner in which the invention may be used to advantage, it should be appreciated that the invention is not limited thereto. Accordingly, any and all modifications, variations, or equivalent arrangements which may occur to those skilled in the art, should be considered to be within the scope of the invention as defined in the appended claims.

## Claims

1. A canted coil spring assembly comprising :
   a plurality of wire coils canted along a centerline thereof ;
   primary loading means for comprising said plurality of coils generally along a major axis thereof, said plurality of coils having a specific primary load-deflection characteristics in a primary loading direction; and
   secondary loading means for defining the specific primary load-deflection characteristics.

2. The canted coil spring assembly according to Claim 1 wherein said secondary loading means includes means for loading said plurality of coils along a minor axis thereof.

3. The canted coil spring assembly according to Claim 2 wherein said secondary loading means includes means for causing said plurality of coils to assume a turn angle.

4. The canted coil spring assembly according to Claim 3 wherein said plurality of coils are interconnected in a manner forming a continuous spring.

5. The canted coil spring assembly according to Claim 4 wherein said plurality of coils are interconnected in a manner forming a circular spring having primary load-deflection characteristics along an axial direction of said circular spring.

6. The canted coil spring assembly according to Claim 4 wherein said plurality of coils are interconnected in a manner forming a circular spring having a primary load-deflection characteristics along a radial direction of said circular spring.

7. The canted coil spring assembly according to Claim 5 wherein said secondary load means comprises surface means for engaging said circular spring, said surface means being at an angle with the spring axial direction.

8. The canted coil spring assembly according to Claim 7 wherein said surface means comprises two parallel surfaces.

9. The canted coil spring assembly according to claim 7 wherein said secondary load means further comprises wedge means for cooperating with said surface means to deflect the plurality of coils along the minor axis thereof.

10. The canted coil spring assembly according to Claim 7 wherein said surface means comprises two surfaces disposed at an angle with one another.

11. The canted coil spring assembly according to Claim 9 wherein said wedge means is fixed to said primary loading means.

12. A canted coil spring assembly comprising :
a plurality of wire coils canted along a centerline thereof ;
primary loading means for comprising said plurality of coils, said plurality of coils having a specific primary load-deflection characteristics in a primary loading direction ; and
secondary loading means for defining the specific primary load-deflection characteristics.

13. The canted coil spring assembly according to Claim 12 wherein said primary loading means comprises said plurality of coils along a minor axis thereof.

14. The canted coil spring assembly according to Claim 13 wherein said secondary loading means includes means for loading said plurality of coils along a major axis thereof.

15. The canted coil spring assembly according to Claim 13 wherein said secondary loading means includes means for causing said plurality of coils to assume a turn angle.

16. The canted coil spring assembly according to Claim 14 wherein said plurality of coils are interconnected in a manner forming a continuous spring.

17. The canted coil spring assembly according to Claim 16 wherein said plurality of coils are interconnected in a manner forming a circular spring having primary load-deflection characteristics along an axial direction of said circular spring,

18. The canted coil spring assembly according to Claim 17 wherein said plurality of coils are interconnected in a manner forming a circular spring having a primary load-deflection characteristics along a radial direction of said circular spring.

19. The canted coil spring assembly according to Claim 18 wherein said secondary load means comprises surface means for engaging said circular spring, said surface means being at an angle with the spring axial direction.

20. The canted coil spring assembly according to Claim 19 wherein said surface means comprises two parallel surfaces.

21. The canted coil spring assembly according to Claim 19 wherein said secondary loading means further comprises wedge means for cooperating with said surface means to deflect the plurality of coils along the minor axis thereof.

22. The canted coil spring assembly according to Claim 19 wherein said surface means comprises two surfaces disposed at an angle with one another.

23. The canted coil spring assembly according to claim 21 wherein said wedge means is fixed to said primary loading means.

EP 0 437 227 A2

FIG. 2.

FIG. 1.

FIG. 4.

FIG. 3.

FIG. 5.

FIG. 6.

9

LOAD

MINIMUM LOAD
POINT 106

CALCULATED
BUTT POINT 116

A

110

BASELOAD
POINT

NORMAL SEAL
LOAD POINT 114

MAXIMUM LOAD
POINT 112

104

DEFLECTION AT
MAX LOAD POINT
DEFLECTION

WORKING
DEFLECTION

MINIMUM
DEFLECTION

TOTAL DEFLECTION
AT MAX. LOAD POINT 118

_Fig. 7.

_Fig. 8.

α    126    134
            124

130    128
       132

140

_Fig. 9.

156    α    150

146    148

154    152

160

_Fig. 10.

164

α    166

168

_Fig. 11.

172
178

184

10

_FIG. 12._

_FIG. 13._

_FIG. 14._

_FIG. 15._

_FIG. 16._

_FIG. 17._

_FIG. 18._

_FIG. 19._

_FIG. 20._

_FIG. 21._

_FIG. 22._

_FIG. 23._

_FIG. 24._

_FIG. 25._

_FIG. 26._

_Fig. 27._

_Fig. 28._

FIG. 29.

FIG. 30.

FIG. 31.

FIG. 32.